# EUROPEAN PATENT APPLICATION

(11) **EP 4 633 254 A1**
(43) Date of publication of application: **15.10.2025**
(21) Application number: 23910292.4
(22) Date of filing: 20.12.2023
(51) Int. Cl.: H04W 56/00

(54) **SIDELINK COMMUNICATION METHOD, AND APPARATUS**

(30) Priority: 30.12.2022 CN 202211738745
(71) Applicant: Huawei Technologies Co., Ltd., Shenzhen, Guangdong 518129 (CN)
(72) Inventor: LI, Xiangyu, Shenzhen, Guangdong 518129 (CN); FAN, Qiang, Shenzhen, Guangdong 518129 (CN); PENG, Wenjie, Shenzhen, Guangdong 518129 (CN); LOU, Chong, Shenzhen, Guangdong 518129 (CN)
(74) Representative: Pfenning, Meinig & Partner mbB
(86) International application number: PCT/CN2023/140170
(87) International publication number: WO 2024/140363

(57) **Abstract**

This application provides a sidelink communication method and an apparatus. In the method, a first terminal device obtains a clock set supported by a second terminal device, and determines, based on clock sets supported by the two terminal devices, whether to provide timing for the second terminal device. When the clock sets supported by the two terminal devices do not match, the first terminal device provides timing for the second terminal device, so that clock synchronization between the two terminal devices can be implemented, and a deterministic communication delay can be ensured, to help a sidelink support a time-sensitive network feature. When the clock sets supported by the two terminal devices match, timing is not provided between the two terminal devices, so that unnecessary timing can be avoided, and signaling overheads can be reduced.

## Description

This application claims priority to Chinese Patent Application No. 202211738745.9, filed with the China National Intellectual Property Administration on December 30, 2022 and entitled "SIDELINK COMMUNICATION METHOD AND APPARATUS", which is incorporated herein by reference in its entirety.

### TECHNICAL FIELD

This application relates to the communication field, and more specifically, to a sidelink communication method and an apparatus.

### BACKGROUND

In a wireless communication system, user equipments (user equipments, UEs) may directly communicate with each other without using a network device. An interface between the UEs is referred to as a PC5 interface, and a link between the UEs is referred to as a sidelink (sidelink, SL). Data transmission may be directly performed between the UEs over the SL without using the network device. Therefore, a communication delay can be effectively reduced.

In a scenario in which two UEs perform SL communication, each of the two UEs needs to perform communication based on a locally used clock. However, frequencies, periods, phases, and duty cycles of clock signals used by the two UEs may be different. Consequently, an average communication delay between the two UEs may be large, or a delay jitter during communication between the two UEs may be large, affecting quality of the communication between the two UEs over the SL.

How to improve the quality of the communication between the UEs over the SL is a problem that needs to be considered.

### SUMMARY

This application provides a communication method and an apparatus, to improve quality of sidelink communication.

According to a first aspect, a sidelink communication method is provided. The method may be performed by a first terminal device, or may be performed by a component (for example, a chip or a circuit) of the first terminal device. This is not limited in this application. For ease of description, an example in which the method is performed by the first terminal device is used below for description.

The method may include: The first terminal device receives first capability information from a second terminal device, where the first capability information indicates a first clock set supported by the second terminal device, and the first clock set includes at least one clock; and the first terminal device determines, based on the first clock set and a second clock set supported by the first terminal device, whether to provide timing for the second terminal device, where the second clock set includes at least one clock.

In the foregoing solution, the first terminal device determines, based on the second clock set supported by the first terminal device and the first clock set supported by the second terminal device, whether to provide timing for the second terminal device. Compared with a case of directly providing timing for the second terminal device without determining, in the foregoing solution, whether to provide timing for the second terminal device can be more appropriately determined. Timing is provided when timing needs to be provided, to implement accurate time synchronization between two terminal devices, ensure a deterministic communication delay, and help a sidelink support a time-sensitive network feature to the fullest extent, so as to improve communication quality of the sidelink. In addition, when timing is not needed, unnecessary timing is avoided, and signaling overheads are reduced.

In a possible implementation, that the first terminal device determines, based on the first clock set and the second clock set supported by the first terminal device, whether to provide timing for the second terminal device includes: When the second clock set includes a timing clock candidate set, and the first clock set does not include the timing clock candidate set, the first terminal device determines to provide timing for the second terminal device based on a target timing clock in the timing clock candidate set.

In a possible implementation, the method further includes: The first terminal device sends first indication information to the second terminal device, where the first indication information indicates the time information of the target timing clock.

In a possible implementation, when the timing clock candidate set includes a plurality of timing clocks, the target timing clock is a timing clock with a highest priority in the plurality of timing clocks.

In a possible implementation, that the first terminal device determines, based on the first clock set and the second clock set supported by the first terminal device, whether to provide timing for the second terminal device includes: When both the second clock set and the first clock set include a communication clock candidate set, the first terminal device determines not to provide timing for the second terminal device.

In a possible implementation, the method further includes: The first terminal device sends second indication information to the second terminal device, where the second indication information indicates to perform communication with the first terminal device based on a target communication clock in the communication clock candidate set.

In the foregoing solution, after determining the target communication clock, the first terminal device indicates the target communication clock to the second terminal device, so that two sides have consistent understanding of the target communication clock. Compared with a case in which both the first terminal device and the second terminal device determine the target communication clock, in the foregoing solution, processing complexity of the second terminal device can be reduced.

In a possible implementation, the target communication clock is a communication clock with a highest priority in the communication clock candidate set.

In a possible implementation, the method further includes: The first terminal device sends a first request message to the second terminal device, where the first request message is used to request information about the clock set supported by the second terminal device.

In a possible implementation, the first request message includes second capability information, and the second capability information indicates the second clock set.

According to a second aspect, a sidelink communication method is provided. The method is a method that corresponds to the method in the first aspect and that is performed by a second terminal device, so that beneficial effects that can be implemented by the method in the first aspect can also be implemented. Alternatively, the method may be performed by a component (for example, a chip or a circuit) of the second terminal device. This is not limited in this application. For ease of description, an example in which the method is performed by the second terminal device is used below for description.

The method may include: The second terminal device sends first capability information of the second terminal device to a first terminal device, where the first capability information indicates a first clock set supported by the second terminal device, and the first clock set includes at least one clock; and the second terminal device receives first indication information from the first terminal device, where the first indication information indicates time information of a target timing clock, and the target timing clock is determined based on the first clock set; or the second terminal device receives second indication information from the first terminal device, where the second indication information indicates to perform communication with the first terminal device based on a target communication clock, and the target communication clock is determined based on the first clock set.

In a possible implementation, the method further includes: The second terminal device synchronizes with the first terminal device based on the target timing clock.

In a possible implementation, the method further includes: The second terminal device receives a first request message from the first terminal device, where the first request message is used to request information about the clock set supported by the second terminal device.

In a possible implementation, the first request message includes second capability information of the first terminal device, the second capability information indicates a second clock set supported by the first terminal device, and the second clock set includes at least one clock; and the second terminal device determines, based on the first clock set and the second clock set, the target communication clock used for communication with the first terminal device.

In the foregoing solution, the first terminal device and the second terminal device exchange the clock set supported by the first terminal device and the clock set supported by the second terminal device, and determine the target communication clock according to a same determining rule. Compared with a case in which the first terminal device indicates the target communication clock to the second terminal device, in the foregoing solution, signaling overheads can be reduced.

According to a third aspect, a sidelink communication method is provided. The method may be performed by a first terminal device, or may be performed by a component (for example, a chip or a circuit) of the first terminal device. This is not limited in this application. For ease of description, an example in which the method is performed by the first terminal device is used below for description.

The method may include: The first terminal device receives first clock information from a second terminal device, where the first clock information indicates a first clock currently used by the second terminal device; and the first terminal device determines, based on the first clock and a second clock currently used by the first terminal device, whether to provide timing for the second terminal device.

In the foregoing solution, the first terminal device determines, based on the currently used clock and the clock currently used by the second terminal device, whether to provide timing for the second terminal device. Compared with a case of directly providing timing for the second terminal device without determining, in the foregoing solution, whether to provide timing for the second terminal device can be more appropriately determined. Timing is provided when timing needs to be provided, to implement accurate time synchronization between two terminal devices, ensure a deterministic communication delay, and help a sidelink support a time-sensitive network feature to the fullest extent, so as to improve communication quality of the sidelink. In addition, when timing is not needed, unnecessary timing is avoided, and signaling overheads are reduced.

In a possible implementation, that the first terminal device determines, based on the first clock and the second clock currently used by the first terminal device, whether to provide timing for the second terminal device includes: When the first clock is different from the second clock, the first terminal device determines to provide timing for the second terminal device based on the second clock.

In a possible implementation, the method further includes: The first terminal device sends third indication information to the second terminal device, where the third indication information indicates time information of the second clock.

In a possible implementation, that the first terminal device determines, based on the first clock and the second clock currently used by the first terminal device, whether to provide timing for the second terminal device includes: When the first clock is the same as the second clock, the first terminal device determines not to provide timing for the second terminal device.

In a possible implementation, the method further includes: The first terminal device sends fourth indication information to the second terminal device, where the fourth indication information indicates to perform communication with the first terminal device based on the first clock.

In the foregoing solution, the first terminal device indicates, to the second terminal device, a clock used for communication, so that two sides have consistent understanding of a target communication clock. Compared with a case in which both the first terminal device and the second terminal device determine the target communication clock, in the foregoing solution, processing complexity of the second terminal device can be reduced.

In a possible implementation, the method further includes: The first terminal device sends a second request message to the second terminal device, where the second request message is used to request information about the clock currently used by the second terminal device.

In a possible implementation, the second request message further includes second clock information, and the second clock information indicates the second clock.

In the foregoing solution, the second terminal device determines the target communication clock based on the first clock and the second clock. Compared with a case in which the first terminal device indicates the target communication clock to the second terminal device, in the foregoing solution, signaling overheads can be reduced.

According to a fourth aspect, a sidelink communication method is provided. The method is a method that corresponds to the method in the third aspect and that is performed by a second terminal device, so that beneficial effects that can be implemented by the method in the third aspect can also be implemented. Alternatively, the method may be performed by a component (for example, a chip or a circuit) of the second terminal device. This is not limited in this application. For ease of description, an example in which the method is performed by the second terminal device is used below for description.

The method may include: The second terminal device sends first clock information to a first terminal device, where the first clock information indicates a first clock currently used by the second terminal device; and the second terminal device receives third indication information from the first terminal device, where the third indication information indicates time information of a second clock, and the second clock is a clock currently used by the first terminal device; or the second terminal device receives fourth indication information from the first terminal device, where the fourth indication information indicates to perform communication with the first terminal device based on the first clock.

In a possible implementation, the method further includes: The second terminal device synchronizes with the first terminal device based on the second clock.

In a possible implementation, the method further includes: The second terminal device receives a second request message from the first terminal device, where the second request message is used to request information about the clock currently used by the second terminal device.

In a possible implementation, the second request message includes second clock information, and the second clock information indicates the second clock; and the second terminal device determines, based on the first clock and the second clock, a target communication clock used for communication with the first terminal device.

In the foregoing solution, the first terminal device and the second terminal device exchange the clock currently used by the first terminal device and the clock currently used by the second terminal device, and determine, according to a same determining rule, a clock used for communication. Compared with a case in which the first terminal device indicates the target communication clock to the second terminal device, in the foregoing solution, signaling overheads can be reduced.

According to a fifth aspect, a communication apparatus is provided. The apparatus is configured to perform the method in any one of the possible implementations of the first aspect to the fourth aspect. Specifically, the apparatus may include units and/or modules, for example, a transceiver unit and/or a processing unit, configured to perform the method in any one of the possible implementations of the first aspect to the fourth aspect.

In a possible implementation, the transceiver unit may be a transceiver or an input/output interface, and the processing unit may be at least one processor or a processing circuit. Optionally, the transceiver may be a transceiver circuit. Optionally, the input/output interface may be an input/output circuit.

According to a sixth aspect, a communication apparatus is provided, including a processor and an interface circuit. The interface circuit is configured to: receive a signal from another communication apparatus and transmit the signal to the processor, or send a signal from the processor to another communication apparatus. The processor is configured to implement the method in any one of the possible implementations of the first aspect to the fourth aspect by using a logic circuit or executing code instructions.

According to a seventh aspect, a communication apparatus is provided, including a processor and a memory. The processor is configured to read instructions stored in the memory, and may receive a signal via a transceiver, and transmit a signal via a transmitter, to perform the method in any one of the possible implementations of the first aspect to the fourth aspect.

According to an eighth aspect, a computer-readable storage medium is provided. The storage medium stores a computer program or instructions. When the computer program or the instructions are executed by a communication apparatus, the method in any one of the possible implementations of the first aspect to the fourth aspect is implemented.

According to a ninth aspect, a computer program product including instructions is provided. When the computer program product is run on a communication apparatus, the communication apparatus is enabled to perform the method in any one of the possible implementations of the first aspect to the fourth aspect.

According to a tenth aspect, a computer program instruction is provided. When the computer program instruction is run on a computer, the computer is enabled to perform the method in any one of the possible implementations of the first aspect to the fourth aspect.

### BRIEF DESCRIPTION OF DRAWINGS

FIG. 1 is a diagram of a vehicle-to-everything communication architecture;
FIG. 2 is a diagram of a terminal-to-terminal relay scenario;
FIG. 3 is a diagram of a sidelink communication method 100 according to this application;
FIG. 4 is a diagram of a sidelink communication method 200 according to this application;
FIG. 5 is a block diagram of a communication apparatus according to this application;
   and
FIG. 6 is another block diagram of a communication apparatus according to this application.

### DESCRIPTION OF EMBODIMENTS

Embodiments of this application may be applied to a 5th generation (5th generation, 5G) mobile communication system, a 6th generation (6th generation, 6G) mobile communication system, a Wi-Fi system, or a future mobile communication system.

A base station (base station) in this application may be an evolved NodeB (evolved NodeB, eNodeB), a transmission reception point (transmission reception point, TRP), a next generation NodeB (next generation NodeB, gNB) in the 5G mobile communication system, a next generation NodeB in the 6G mobile communication system, a base station in the future mobile communication system, an access node in the Wi-Fi system, or the like, or may be a module or a unit that completes some functions of the base station.

A UE is a device having a wireless transceiver function, and may send a signal to the base station, or receive a signal from the base station. The UE may also be referred to as a terminal, a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

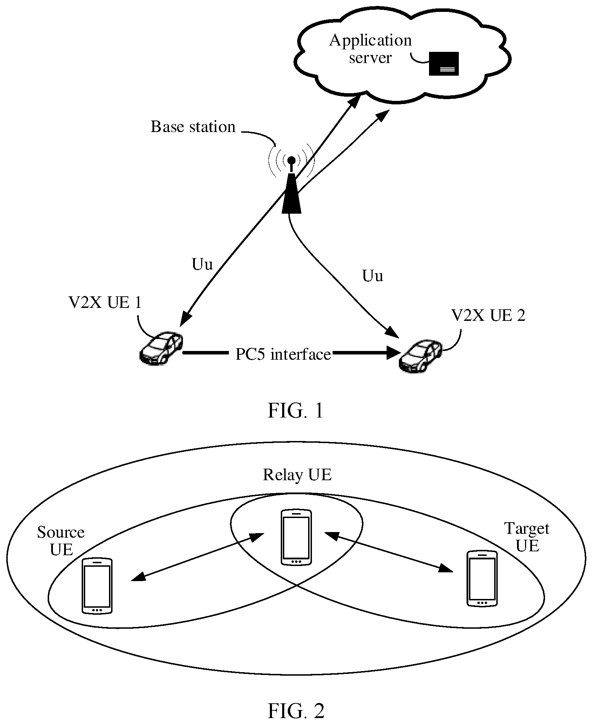

FIG. 1 is a diagram of the V2X communication architecture. As shown in FIG. 1, the architecture includes two wireless communication interfaces: a proximity-based services communication (proximity-based services communication 5, PC5) interface between UEs and a Uu interface between a base station and a UE. As shown in FIG. 1, a V2X UE 1 and a V2X UE 2 may directly communicate with each other through the PC5 interface, and a communication link is also defined as a sidelink. Alternatively, a V2X UE 1 and a V2X UE 2 may communicate with each other through a Uu interface. The V2X UE 1 sends V2X data to the base station through the Uu interface, the base station sends the V2X data to a V2X application server for processing, then the V2X application server delivers processed data to the base station, and the base station sends the processed data to the V2X UE 2. In a Uu interface-based communication mode, a base station that receives uplink data of the V2X UE 1 and a base station that sends downlink data to the V2X UE 2 may be a same base station, or may be different base stations. This may be specifically determined by locations of the V2X UEs. This application mainly relates to a scenario in which two UEs directly communicate with each other through a PC5 interface.

FIG. 2 is a diagram of a UE-to-UE relay (UE-to UE-relay, U2U relay) scenario. As shown in FIG. 2, U2U relay is a technology in which a source UE communicates with a target UE via a relay UE, and may be applied to coverage enhancement (where for example, signal coverage between the source UE and the target UE is poor or the source UE and the target UE are outside coverage) or capacity improvement (where for example, the relay UE is a device with a high capability) of a sidelink. Both communication between the source UE and the relay UE and communication between the relay UE and the target UE are implemented over the sidelink. A first terminal device or a second terminal device in this application may be the source UE, the relay UE, or the target UE in the U2U relay scenario.

In a scenario in which two UEs perform SL communication, each of the two UEs needs to perform communication based on a locally used clock. However, frequencies, periods, phases, and duty cycles of clock signals used by the two UEs may be different. Consequently, an average communication delay between the two UEs may be large, or a delay jitter during communication between the two UEs may be large, affecting quality of the communication between the two UEs over the SL. As a result, quality of service of a service transmitted between the two UEs cannot be ensured. For example, if a delay of transmitting an extended reality (extended reality, XR) service between two devices is large, or a delay jitter is large, a user may feel unreal or even dizzy when watching a picture, and user experience is very poor. Therefore, how to improve the quality of the communication between the UEs over the SL is a problem that needs to be considered.

To better understand embodiments of this application, the following describes some technical terms in this application.

### 1. Time-sensitive network (time-sensitive network, TSN)

A TSN is a set of protocol standards that is being developed by a TSN task group in an IEEE802.1 working group. This standard defines a time-sensitive mechanism for Ethernet data transmission, and this improves certainty and reliability of a standard Ethernet, to ensure that the Ethernet can provide stable and consistent service levels for key data transmission and implement low-delay stream services with time synchronization.

Main features of the TSN include time synchronization, deterministic transmission, dynamic network configuration, compatibility, security, and the like. Key technologies of the TSN include the time synchronization, reliability, traffic scheduling and shaping, and resource management. An accurate time synchronization mechanism is a basis for ensuring a deterministic delay. It may be understood that ensuring the deterministic delay includes reducing an average communication delay and reducing a communication delay jitter.

### 2. Clock

A clock in this application may be a 5th generation communication system (5th generation system, 5GS) clock, a global navigation satellite system (global navigation satellite system, GNSS) clock, a TSN clock, a device internal clock, or the like. The GNSS clock has a plurality of clock types, for example, a global positioning system (global positioning system, GPS), a global navigation satellite system (global navigation satellite system, GLONASS), a BeiDou navigation satellite system, or a Galileo navigation satellite system. The TSN clock has a plurality of clock types. For example, clocks belonging to different TSN domains have different clock types. It is assumed that a TSN includes a TSN domain #1, a TSN domain #2, and a TSN domain #3, and the TSN clock includes a TSN domain #1 clock, a TSN domain #2 clock, and a TSN domain #3 clock.

Two clocks in this application are different. It may be understood that the two clocks are respectively any two of the 5GS clock, the GNSS clock, the TSN clock, and the device internal clock. For example, one clock is the GNSS clock, and the other clock is the TSN clock.

Alternatively, that two clocks in this application are different may be understood as that the two clocks have different clock types. For example, both the two clocks are the GNSS clocks. A clock type of one clock is the GPS, and a clock type of the other clock is the BeiDou navigation satellite system. For another example, both the two clocks are the TSN clocks. A clock type of one clock is the TSN domain #1 clock, and a clock type of the other clock is the TSN domain #2 clock.

Correspondingly, that two clocks in this application are the same may be understood as that the two clocks are a same clock, and/or the two clocks are clocks of a same clock type.

### 3. Timing (timing)

Timing is to provide timing information for another device or system based on a standard or customized interface and protocol. Basic channels of timing are a short wave, a TV signal, a cable, a network, and the like. Timing precision ranges from nanoseconds (ns) to milliseconds (ms). An atomic clock, a satellite system, a network, and a high-stability oscillator are mainly used as a time source.

In this application, that one terminal device (for ease of description, referred to as a first terminal device) provides timing for another terminal device (for ease of description, referred to as a second terminal device) may be understood as that the first terminal device serves as a clock source to indicate accurate time to the second terminal device.

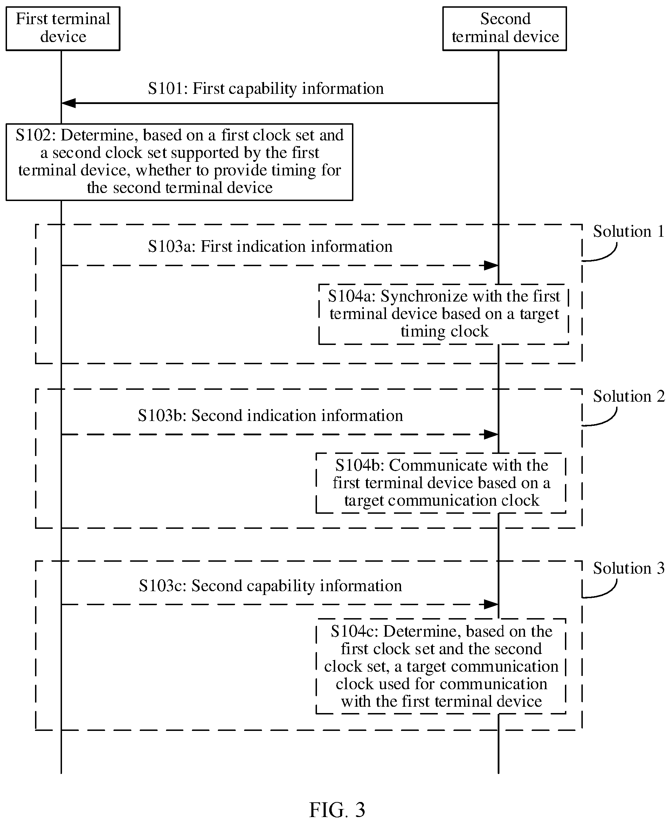

FIG. 3 is a diagram of a sidelink communication method 100 according to this application.

S101: A second terminal device sends first capability information to a first terminal device, and correspondingly, the first terminal device receives the first capability information from the second terminal device.

The first capability information indicates a first clock set supported by the second terminal device, and the first clock set includes at least one clock. Alternatively, the first clock set may include reference time of at least one clock or synchronization time of at least one clock.

It should be noted that, in this application, that a terminal device supports a clock may be understood as that the terminal device may use the clock, or may be understood as that the terminal device can keep clock synchronization with the clock, or may be understood as that the terminal device can obtain time information of the clock, for example, accurate reference time.

S101 may be triggered in a plurality of manners. The following provides several examples.

Example 1-1: When an access stratum (access stratum) of the second terminal device needs to perform TSN service transmission, the second terminal device may trigger S101. For example, an upper layer of the second terminal device submits data of a TSN service to the access stratum of the second terminal device, and can implicitly indicate, to the access stratum, that TSN service transmission needs to be performed. For another example, the access stratum of the second terminal device receives, from the upper layer of the second terminal device, an explicit indication indicating that the TSN service needs to be transmitted, and the access stratum of the second terminal device determines, based on the explicit indication, that TSN service transmission needs to be performed.

Example 1-2: When the clock supported by the second terminal device changes, for example, when one or more clocks in the clock set supported by the second terminal device are invalid or an available clock is added, S101 is triggered.

Example 1-3: S101 is triggered by a message sent by the first terminal device. For example, the first terminal device sends a first request message to the second terminal device, and correspondingly, the second terminal device receives the first request message from the first terminal device. The first request message is used to request information about a clock set supported by the second terminal device. Optionally, the first request message may be a clock request message; or the first request message may be a sidelink user equipment capability request message (UE Capability Enquiry Sidelink). Optionally, the first terminal device may send the first request message when the access stratum needs to perform TSN service transmission, or the first terminal device may send the first request message when the supported clock changes. For example, an upper layer of the first terminal device submits the data of the TSN service to the access stratum of the first terminal device, and can implicitly indicate, to the access stratum, that TSN service transmission needs to be performed. For another example, the access stratum of the first terminal device receives, from the upper layer of the first terminal device, an explicit indication indicating that the TSN service needs to be transmitted, and the access stratum of the first terminal device determines, based on the explicit indication, that TSN service transmission needs to be performed. That the clock supported by the first terminal device changes may be understood as that one or more clocks in the clock set supported by the first terminal device are invalid or an available clock is added.

S102: The first terminal device determines, based on the first clock set and a second clock set supported by the first terminal device, whether to provide timing for the second terminal device.

The second clock set includes at least one clock.

In the foregoing solution, the first terminal device determines, based on the clock set supported by the first terminal device and the clock set supported by the second terminal device, whether to provide timing for the second terminal device. Compared with a case of directly providing timing for the second terminal device without determining, in the foregoing solution, whether to provide timing for the second terminal device can be more appropriately determined. Timing is provided when timing needs to be provided, to implement accurate time synchronization between two terminal devices, ensure a deterministic communication delay, and help a sidelink support a time-sensitive network feature to the fullest extent, so as to improve communication quality of the sidelink. In addition, when timing is not needed, unnecessary timing is avoided, and signaling overheads are reduced.

For example, S102 may be implemented in a plurality of manners. Implementation 1 of S102 corresponds to Solution 1 in FIG. 3, and Implementation 2 of S102 corresponds to Solution 2 or Solution 3 in FIG. 3.

Implementation 1: When the second clock set includes a timing clock candidate set, and the first clock set does not include the timing clock candidate set, the first terminal device determines, based on a target timing clock in the timing clock candidate set, to provide timing for the second terminal device.

The timing clock candidate set includes one or more timing clocks. The one or more timing clocks include the target timing clock.

In a possible implementation, when the timing clock candidate set includes a plurality of timing clocks, the target timing clock is a timing clock with a highest priority in the plurality of timing clocks. Optionally, the method 100 may further include: The first terminal device determines the timing clock with the highest priority in the plurality of timing clocks as the target timing clock according to a priority rule.

In an example, the priority rule may be that a priority of a 5GS clock is the highest, a priority of a GNSS clock is lower than that of the 5GS clock, a priority of a TSN clock is lower than that of the GNSS clock, and a priority of a device internal clock is the lowest. Assuming that the timing clock candidate set includes the 5GS clock and the TSN clock, the first terminal device determines the 5GS clock as the target timing clock. In another example, the priority rule may be that a priority of a clock used by a base station to provide timing for the first terminal device is higher than a priority of a clock obtained by the first terminal device in another manner. Assuming that the timing clock candidate set includes the clock used by the base station to provide timing for the first terminal device, the first terminal device determines the clock used by the base station to provide timing for the first terminal device as the target timing clock. The clock used by the base station to provide timing for the first terminal device may also be understood as a clock for providing timing based on a Uu interface. Therefore, the first terminal device can keep clock synchronization with the base station and the second terminal device based on a same clock. Compared with a case of keeping clock synchronization with the base station and the second terminal device based on different clocks, the first terminal device needs to maintain a smaller quantity of clocks, so that complexity of the first terminal device can be reduced. In still another example, the priority rule may be that a priority of a clock currently used by the first terminal device is higher than a priority of a clock currently not used by the first terminal device. Assuming that the timing clock candidate set includes the clock currently used by the first terminal device, the first terminal device may determine the currently used clock as the target timing clock. Optionally, the priority rule in the foregoing three examples may be predefined in a protocol, or configured by a network device for the first terminal device, or configured by another terminal device for the first terminal device. Alternatively, the first terminal device may obtain the priority rule in another manner. This is not limited in this application.

In the foregoing solution, the first terminal device provides timing when determining, based on the clock set supported by the first terminal device and the clock set supported by the second terminal device, that timing needs to be provided, so that accurate time synchronization between the two terminal devices can be implemented, to ensure a deterministic communication delay, and help a sidelink support a time-sensitive network feature to the fullest extent, so as to improve communication quality of the sidelink.

Optionally, in correspondence to Implementation 1 of S102, the method 100 may further include Solution 1. Solution 1 includes S103a and S104a.

S103a: The first terminal device sends first indication information to the second terminal device, and correspondingly, the second terminal device receives the first indication information from the first terminal device.

S103a may be understood as a specific example in which the first terminal device provides timing for the second terminal device. The first indication information indicates time information of the target timing clock. The time information of the target timing clock may be specifically accurate reference time (accurate reference time) of the target timing clock. For example, the accurate reference time may be time corresponding to a specific direct frame number (direct frame number, DFN) boundary, or the accurate reference time may be time corresponding to an end moment of a specific DFN. Optionally, the specific DFN may be indicated by the first terminal device to the second terminal device, or the specific DFN may be determined by the second terminal device according to a preset rule. Specifically, the first terminal device may send the accurate reference time to the second terminal device in a broadcast or unicast manner. In a possible implementation, the first terminal device sends the accurate reference time to the second terminal device in a broadcast manner by using a master information block (master information block, MIB) or a system information block (system information block, SIB). The accurate reference time is at a boundary of an end of a system information (system information, SI) window for MIB or SIB transmission, or the accurate reference time is at a DFN boundary following a boundary of an end of an SI window for MIB or SIB transmission. In another possible implementation, the first terminal device indicates an end moment of a reference DFN to the second terminal device in a unicast manner. The reference DFN may be a latest DFN when the second terminal device receives a unicast message sent by the first terminal device, and the reference DFN is indicated by the first terminal device to the second terminal device.

Optionally, Solution 1 may further include: Step 1: The first terminal device sends indication information #1 to the second terminal device, and correspondingly, the second terminal device receives the indication information #1 from the first terminal device. The indication information #1 indicates the target timing clock. It should be noted that step 1 may be performed before, after, or simultaneously with S103a. This is not limited in this application.

That indication information in this application indicates a clock may be understood as that the indication information includes identification information of the clock. For example, different identification information indicates different clocks. Alternatively, a same piece of identification information indicates clocks of a plurality of clock types. For example, a same piece of identification information indicates a GNSS clock whose clock type is a GPS, a GLONASS, or a BeiDou navigation satellite system. The indication information further includes clock type information, indicating a clock type of the clock, for example, the GPS; in this case, the indication information indicates a GNSS clock whose clock type is the GPS. Unified descriptions are provided herein, and details are not described below again.

S104a: The second terminal device synchronizes with the first terminal device based on the target timing clock. In other words, the second terminal device synchronizes with the target timing clock based on the first indication information. Therefore, the first terminal device and the second terminal device can keep accurate time synchronization.

Optionally, after S104a, the first terminal device may communicate with the second terminal device based on the target timing clock.

Implementation 2: When both the second clock set and the first clock set include a communication clock candidate set, the first terminal device determines not to provide timing for the second terminal device.

The communication clock candidate set includes one or more communication clocks.

In the foregoing solution, the first terminal device determines, based on the clock set supported by the first terminal device and the clock set supported by the second terminal device, that the first terminal device may not provide timing for the second terminal device. This can reduce unnecessary timing when ensuring clock synchronization between the first terminal device and the second terminal device, to reduce signaling overheads when ensuring communication quality.

Optionally, in correspondence to Implementation 2 of S102, the method 100 may further include Solution 2. Solution 2 includes S103b and S104b.

S103b: The first terminal device sends second indication information to the second terminal device, where the second indication information indicates to perform communication with the first terminal device based on a target communication clock in the communication clock candidate set.

One or more communication clocks in the communication clock candidate set include the target communication clock.

In a possible implementation, when the communication clock candidate set includes a plurality of communication clocks, the target communication clock is a communication clock with a highest priority in the plurality of communication clocks. Optionally, the method 100 may further include: The first terminal device determines the communication clock with the highest priority in the plurality of communication clocks as the target communication clock according to a priority rule.

In an example, the priority rule may be that a priority of a 5GS clock is the highest, a priority of a GNSS clock is lower than that of the 5GS clock, a priority of a TSN clock is lower than that of the GNSS clock, and a priority of a device internal clock is the lowest. Assuming that the communication clock candidate set includes the 5GS clock and the TSN clock, the first terminal device determines the 5GS clock as the target communication clock. In another example, the priority rule may be that a priority of a clock used by a base station to provide timing for the first terminal device is higher than a priority of a clock obtained by the first terminal device in another manner. Assuming that the communication clock candidate set includes the clock used by the base station to provide timing for the first terminal device, the first terminal device determines the clock used by the base station to provide timing for the first terminal device as the target communication clock. The clock used by the base station to provide timing for the first terminal device may also be understood as a clock for providing timing based on a Uu interface. Therefore, the first terminal device can communicate with the base station and the second terminal device by using a same clock. Compared with a case of communicating with the base station and the second terminal device by using different clocks, the first terminal device needs to maintain a smaller quantity of clocks, so that complexity of the first terminal device can be reduced. In still another example, the priority rule may be that a priority of a clock currently used by the first terminal device is higher than a priority of a clock currently not used by the first terminal device. Assuming that the communication clock candidate set includes the clock currently used by the first terminal device, the first terminal device may determine the currently used clock as the target communication clock. Optionally, the priority rule in the foregoing three examples may be predefined in a protocol, or configured by a network device for the first terminal device, or configured by another terminal device for the first terminal device. Alternatively, the first terminal device may obtain the priority rule in another manner. This is not limited in this application.

S104b: The second terminal device communicates with the first terminal device based on the target communication clock.

In the foregoing solution, after determining the target communication clock, the first terminal device indicates the target communication clock to the second terminal device, so that two sides have consistent understanding of the target communication clock. Compared with a case in which both the first terminal device and the second terminal device determine the target communication clock, in the foregoing solution, processing complexity of the second terminal device can be reduced.

Optionally, in correspondence to Implementation 2 of S102, the method 100 may further include Solution 3. Solution 3 includes S103c and S104c.

S103c: The first terminal device sends second capability information to the second terminal device, and correspondingly, the second terminal device receives the second capability information from the first terminal device.

The second capability information indicates the second clock set of the first terminal device.

S103c may be performed before, after, or simultaneously with S101, or may be performed before, after, or simultaneously with S102. In an implementation, the second capability information may be carried in the first request message in Example 1-3.

S104c: The second terminal device determines, based on the first clock set and the second clock set, a target communication clock used for communication with the first terminal device.

For example, the second terminal device may first determine the communication clock candidate set, and then determine the target communication clock from the communication clock candidate set. For example, the second terminal device may determine one or more clocks included in both the first clock set and the second clock set as the communication clock candidate set. For the second terminal device, all clocks included in the communication clock candidate set are communication clocks that can be used for communication with the first terminal device. For another example, when the communication clock candidate set includes a plurality of communication clocks, the target communication clock is a communication clock with a highest priority in the plurality of communication clocks. For specific descriptions of the priority rule used to determine the target communication clock from the plurality of communication clocks, refer to the corresponding descriptions in S103b. A difference lies in that the first terminal device in the corresponding descriptions in S103 is replaced with the second terminal device.

Optionally, Solution 3 may further include: The first terminal device, determines, according to a determining rule that is the same as that in S104c, the target communication clock used for communication with the second terminal device. Then, the first terminal device communicates with the second terminal device based on the target communication clock.

In the foregoing solution, the first terminal device and the second terminal device exchange the clock set supported by the first terminal device and the clock set supported by the second terminal device, and determine the target communication clock according to the same determining rule. Compared with a case in which the first terminal device indicates the target communication clock to the second terminal device, in the foregoing solution, signaling overheads can be reduced.

It should be noted that the second terminal device in this application may also have a capability of determining, based on the clock set supported by the second terminal device and a clock set supported by another terminal device, whether to provide timing for the another terminal device, and a capability of providing timing for the another terminal device. For a specific implementation, refer to an implementation of the first terminal device.

It should be further noted that, in the method 100, both the first terminal device and the second terminal device may determine whether to provide timing for a peer terminal device. For example, the second terminal device may first obtain the second capability information, and then determine whether to provide timing for the first terminal device.

Example 2-1: When Implementation 1 is performed, the second terminal device determines, based on determining logic that is the same as that of the first terminal device, to provide timing for the first terminal device based on a target timing clock #1. Then, the second terminal device provides timing for the first terminal device based on the target timing clock #1. The target timing clock (referred to as a target timing clock #2 below for ease of description) is different from the target timing clock #1. In this case, the first terminal device and the second terminal device may determine, in a plurality of manners, a target timing clock that is subsequently used for communication. In a possible implementation, the target timing clock determined by the terminal device that initiates the procedure of the method 100 is used as a clock used when the two terminal devices communicate with each other. For example, before S101 is performed in the method 100, the first terminal device sends a first request message to the second terminal device, that is, the first terminal device initiates the method 100, and the first terminal device communicates with the second terminal device based on the target timing clock #2. For another example, the method 100 is initiated by the second terminal device, and the first terminal device communicates with the second terminal device based on the target timing clock #1. In another possible implementation, a clock that is first used to provide timing in the target timing clock #1 and the target timing clock #2 is used as a clock subsequently used for communication. For example, if the second terminal device has received time information of the target timing clock #2 from the first terminal device before providing timing for the first terminal device, the first terminal device communicates with the second terminal device based on the target timing clock #2.

Example 2-2: When Implementation 2 is performed, the second terminal device determines, according to a determining rule that is the same as that of the first terminal device, not to provide timing for the first terminal device. Optionally, the second terminal device and the first terminal device may determine a target communication clock according to the same determining rule, and communicate with each other based on the target communication clock. For a specific manner of determining the target communication clock, refer to S104c.

In the foregoing solution, the first terminal device and the second terminal device exchange the clock set supported by the first terminal device and the clock set supported by the second terminal device, and determine the target communication clock according to the same determining rule. Compared with a case in which the first terminal device indicates the target communication clock to the second terminal device, in the foregoing solution, signaling overheads can be reduced.

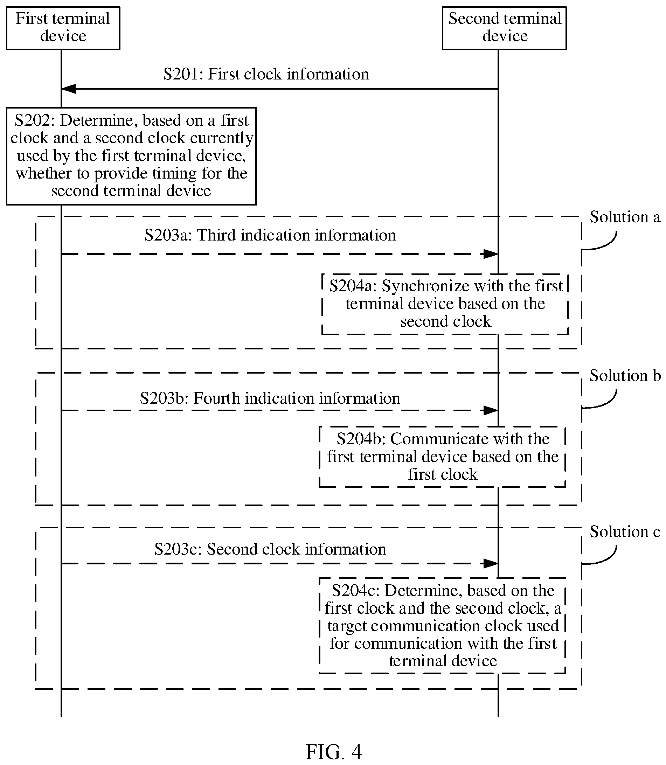

FIG. 4 is a diagram of a sidelink communication method 200 according to this application.

S201: A second terminal device sends first clock information to a first terminal device, and correspondingly, the first terminal device receives the first clock information from the second terminal device.

The first clock information indicates a first clock currently used by the second terminal device.

S201 may be triggered in a plurality of manners. The following provides several examples.

Example 3-1: When an access stratum (access stratum) of the second terminal device needs to perform TSN service transmission, the second terminal device may trigger S201. For example, an upper layer of the second terminal device submits data of a TSN service to the access stratum of the second terminal device, and can implicitly indicate, to the access stratum, that TSN service transmission needs to be performed. For another example, the access stratum of the second terminal device receives, from the upper layer of the second terminal device, an explicit indication indicating that the TSN service needs to be transmitted, and the access stratum of the second terminal device determines, based on the explicit indication, that TSN service transmission needs to be performed.

Example 3-2: When the clock currently used by the second terminal device changes, S201 is triggered.

Example 3-3: S201 is triggered by a message sent by the first terminal device. For example, the first terminal device sends a second request message to the second terminal device, and correspondingly, the second terminal device receives the second request message from the first terminal device. The second request message is used to request information about the clock currently used by the second terminal device. Optionally, the second request message may be a clock request message; or the second request message may be a sidelink user equipment capability request message (UE Capability Enquiry Sidelink). Optionally, the first terminal device may send the second request message when TSN service transmission needs to be performed, or the first terminal device may send the second request message when the currently used clock changes.

S202: The first terminal device determines, based on the first clock and a second clock currently used by the first terminal device, whether to provide timing for the second terminal device.

In the foregoing solution, the first terminal device determines, based on the currently used clock and the clock currently used by the second terminal device, whether to provide timing for the second terminal device. Compared with a case of directly providing timing for the second terminal device without determining, in the foregoing solution, whether to provide timing for the second terminal device can be more appropriately determined. Timing is provided when timing needs to be provided, to implement accurate time synchronization between two terminal devices, ensure a deterministic communication delay, and help a sidelink support a time-sensitive network feature to the fullest extent, so as to improve communication quality of the sidelink. In addition, when timing is not needed, unnecessary timing is avoided, and signaling overheads are reduced.

For example, S202 may be implemented in a plurality of manners. Implementation a of S202 corresponds to Solution a in FIG. 4, and Implementation b of S202 corresponds to Solution b or Solution c in FIG. 4.

Implementation a: When the first clock is different from the second clock, the first terminal device determines to provide timing for the second terminal device based on the second clock.

In the foregoing solution, the first terminal device provides timing when determining, based on the currently used clock and the clock currently used by the second terminal device, that timing needs to be provided, so that accurate time synchronization between the two terminal devices can be implemented, to ensure a deterministic communication delay, and help a sidelink support a time-sensitive network feature to the fullest extent, so as to improve communication quality of the sidelink.

Optionally, in correspondence to Implementation a of S202, the method 200 may further include Solution a. Solution a includes S203a and S204a.

S203a: The first terminal device sends third indication information to the second terminal device, and correspondingly, the second terminal device receives the third indication information from the first terminal device.

S203a may be understood as a specific example in which the first terminal device provides timing for the second terminal device. The third indication information indicates time information of the second clock. The time information of the second clock may be specifically accurate reference time (accurate reference time) of the second clock. For specific understanding of the accurate reference time, refer to corresponding description in S103a.

Optionally, Solution a may further include: Step a: The first terminal device sends indication information #a to the second terminal device, and correspondingly, the second terminal device receives the indication information #a from the first terminal device. The indication information #a indicates the target timing clock. It should be noted that step a may be performed before, after, or simultaneously with S203a.

S204a: The second terminal device synchronizes with the first terminal device based on the second clock. In other words, the second terminal device synchronizes with the second clock based on the third indication information. Therefore, the first terminal device and the second terminal device can keep accurate time synchronization.

Optionally, after S204a, the first terminal device may communicate with the second terminal device based on the second clock.

Implementation b: When the first clock is the same as the second clock, the first terminal device determines not to provide timing for the second terminal device.

In the foregoing solution, the first terminal device determines, based on the currently used clock and the clock currently used by the second terminal device, that the first terminal device may not provide timing for the second terminal device. This can reduce unnecessary timing when ensuring clock synchronization between the first terminal device and the second terminal device, to reduce signaling overheads when ensuring communication quality.

Optionally, in correspondence to Implementation b of S202, the method 200 may further include Solution b. Solution b includes S203b and S204b.

S203b: The first terminal device sends fourth indication information to the second terminal device, and correspondingly, the second terminal device receives the fourth indication information from the first terminal device.

The fourth indication information indicates to perform communication with the first terminal device based on the first clock.

S204b: The second terminal device communicates with the first terminal device based on the first clock and the fourth indication information.

In the foregoing solution, the first terminal device indicates, to the second terminal device, a clock used for communication, so that two sides have consistent understanding of the target communication clock. Compared with a case in which both the first terminal device and the second terminal device determine the target communication clock, in the foregoing solution, processing complexity of the second terminal device can be reduced.

Optionally, in correspondence to Implementation b of S202, the method 200 may further include Solution c. Solution c includes S203c and S204c.

S203c: The first terminal device sends second clock information to the second terminal device, and correspondingly, the second terminal device receives the second clock information from the first terminal device.

The second clock information indicates the second clock currently used by the first terminal device.

S203c may be performed before, after, or simultaneously with S201, or may be performed before, after, or simultaneously with S202. In an implementation, the second clock information may be carried in the second request message in Example 2-3.

S204c: The second terminal device determines, based on the first clock and the second clock, a target communication clock used for communication with the first terminal device.

For example, when the first clock is the same as the second clock, the second terminal device determines the first clock as the target communication clock.

After S204c, Solution c may further include: The second terminal device may communicate with the first terminal device based on the first clock.

In the foregoing solution, the first terminal device and the second terminal device exchange the clock currently used by the first terminal device and the clock currently used by the second terminal device, and determine, according to a same determining rule, a clock used for communication. Compared with a case in which the first terminal device indicates the target communication clock to the second terminal device, in the foregoing solution, signaling overheads can be reduced.

It should be noted that the second terminal device in this application may also have a capability of determining, based on the clock currently used by the second terminal device and a clock currently used by another terminal device, whether to provide timing for the another terminal device, and a capability of providing timing for the another terminal device. For a specific implementation, refer to an implementation of the first terminal device.

It should be further noted that, in the method 200, both the first terminal device and the second terminal device may determine whether to provide timing for a peer terminal device. For example, the second terminal device first obtains the second capability information, and then determines whether to provide timing for the first terminal device.

Example 4-1: When Implementation a is performed, the second terminal device determines, based on determining logic that is the same as that of the first terminal device, to provide timing for the first terminal device based on the first clock. Then, the second terminal device provides timing for the first terminal device based on the first clock. Because the first clock is different from the second clock, the first terminal device and the second terminal device may determine, in a plurality of manners, a clock that is subsequently used for communication. In a possible implementation, the clock determined by the terminal device that initiates the procedure of the method 200 is used as a clock used when the two terminal devices communicate with each other. For example, before S201 is performed in the method 200, the first terminal device sends a first request message to the second terminal device, that is, the first terminal device initiates the method 200, and the first terminal device communicates with the second terminal device based on the second clock. For another example, the method 200 is initiated by the second terminal device, and the first terminal device communicates with the second terminal device based on the first clock. In another possible implementation, a clock that is first used to provide timing in the first clock and the second clock is used as a clock subsequently used for communication. For example, if the second terminal device has received time information of the second clock from the first terminal device before providing timing for the first terminal device, the first terminal device communicates with the second terminal device based on the second clock.

Example 4-2: When Implementation b is performed, the second terminal device determines, according to a determining rule that is the same as that of the first terminal device, not to provide timing for the first terminal device. Optionally, the second terminal device and the first terminal device may determine a target communication clock according to the same determining rule, and communicate with each other based on the target communication clock. For a specific manner of determining the target communication clock, refer to S204c.

In the foregoing solution, the first terminal device and the second terminal device exchange the clock currently used by the first terminal device and the clock currently used by the second terminal device, and determine, according to the same determining rule, a clock used for communication. Compared with a case in which the first terminal device indicates the target communication clock to the second terminal device, in the foregoing solution, signaling overheads can be reduced.

Optionally, the method 200 may further include: The first terminal device and/or the second terminal device may determine a currently used clock in the following manner. The following uses an example in which the first terminal device determines to use the second clock for description. When the first terminal supports a plurality of clocks, the second clock is a clock with a highest priority in the plurality of clocks. For example, the priority rule may be that a priority of a clock used by a base station to provide timing for the first terminal device is higher than a priority of a clock obtained by the first terminal device in another manner. For another example, the priority rule may be predefined in a protocol, or configured by a network device for the first terminal device, or configured by another terminal device for the first terminal device. Alternatively, the first terminal device may obtain the priority rule in another manner. This is not limited in this application. For a description of the priority rule used to determine the second clock from the plurality of clocks, refer to corresponding descriptions in S103b.

It may be understood that, to implement the functions in the foregoing embodiments, the first terminal device and the second terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

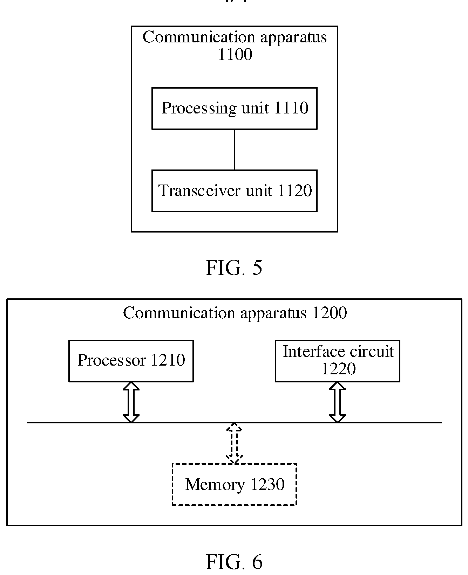

FIG. 5 and FIG. 6 are diagrams of structures of possible communication apparatuses according to embodiments of this application. These communication apparatuses may be configured to implement the functions of the first terminal device or the second terminal device in the foregoing method embodiments, and therefore can also implement the beneficial effects in the foregoing method embodiments. In embodiments of this application, the communication apparatus may be the first terminal device or the second terminal device, or may be a module (for example, a chip) used in the first terminal device or the second terminal device.

As shown in FIG. 5, a communication apparatus 1100 includes a processing unit 1110 and a transceiver unit 1120. The communication apparatus 1100 is configured to implement functions of the first terminal device or the second terminal device in the method embodiments shown in FIG. 3 and FIG. 4.

When the communication apparatus 1100 is configured to implement a function of the first terminal device in the method embodiment shown in FIG. 3, the transceiver unit 1120 is configured to receive first capability information from a second terminal device, where the first capability information indicates a first clock set supported by the second terminal device, and the first clock set includes at least one clock; and the processing unit 1110 is configured to determine, based on the first clock set and a second clock set supported by the first terminal device, whether to provide timing for the second terminal device, where the second clock set includes at least one clock.

When the communication apparatus 1100 is configured to implement a function of the second terminal device in the method embodiment shown in FIG. 3, the transceiver unit 1120 is configured to send first capability information of the second terminal device to a first terminal device, where the first capability information indicates a first clock set supported by the second terminal device, and the first clock set includes at least one clock; and the transceiver unit 1120 is further configured to receive first indication information from the first terminal device, where the first indication information indicates time information of a target timing clock, and the target timing clock is determined based on the first clock set; or is further configured to receive second indication information from the first terminal device, where the second indication information indicates to perform communication with the first terminal device based on a target communication clock, and the target communication clock is determined based on the first clock set.

When the communication apparatus 1100 is configured to implement a function of the first terminal device in the method embodiment shown in FIG. 4, the transceiver unit 1120 is configured to receive first clock information from a second terminal device, where the first clock information indicates a first clock currently used by the second terminal device; and the transceiver unit 1120 is further configured to determine, based on the first clock and a second clock currently used by the first terminal device, whether to provide timing for the second terminal device.

When the communication apparatus 1100 is configured to implement a function of the second terminal device in the method embodiment shown in FIG. 4, the transceiver unit 1120 is configured to send first clock information to a first terminal device, where the first clock information indicates a first clock currently used by the second terminal device; and the transceiver unit 1120 is further configured to receive third indication information from the first terminal device, where the third indication information indicates time information of a second clock, and the second clock is a clock currently used by the first terminal device; or is further configured to receive fourth indication information from the first terminal device, where the fourth indication information indicates to perform communication with the first terminal device based on the first clock.

For more detailed descriptions of the processing unit 1110 and the transceiver unit 1120, refer to the related descriptions in the method embodiments shown in FIG. 3 and FIG. 4.

As shown in FIG. 6, a communication apparatus 1200 includes a processor 1210 and an interface circuit 1220. The processor 1210 and the interface circuit 1220 are coupled to each other. It can be understood that the interface circuit 1220 may be a transceiver or an input/output interface. Optionally, the communication apparatus 1200 may further include a memory 1230, configured to: store instructions executed by the processor 1210, or store input data required by the processor 1210 to run the instructions, or store data generated after the processor 1210 runs the instructions.

When the communication apparatus 1200 is configured to implement the method shown in FIG. 3 or FIG. 4, the processor 1210 is configured to implement a function of the processing unit 1110, and the interface circuit 1220 is configured to implement a function of the transceiver unit 1120.

When the communication apparatus is a chip used in a second terminal device, the chip in the second terminal device implements a function of the second terminal device in the foregoing method embodiments. The chip in the second terminal device receives information from another module (for example, a radio frequency module or an antenna) in the second terminal device, where the information is sent by a first terminal device to the second terminal device. Alternatively, the chip in the second terminal device sends information to another module (for example, a radio frequency module or an antenna) in the second terminal device, where the information is sent by the second terminal device to a first terminal device.

When the foregoing communication apparatus is a chip used in a first terminal device, the chip in the terminal implements a function of the first terminal device in the foregoing method embodiments. The chip in the first terminal device receives information from another module (for example, a radio frequency module or an antenna) in the first terminal device, where the information is sent by a second terminal device to the first terminal device. Alternatively, the chip in the first terminal device sends information to another module (for example, a radio frequency module or an antenna) in the first terminal device, where the information is sent by the first terminal device to a second terminal device.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in the ASIC. In addition, the ASIC may be located in a terminal. The processor and the storage medium may alternatively exist as discrete components in a terminal.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A sidelink communication method, comprising:
receiving, by a first terminal device, first capability information from a second terminal device, wherein the first capability information indicates a first clock set supported by the second terminal device, and the first clock set comprises at least one clock; and
determining, by the first terminal device based on the first clock set and a second clock set supported by the first terminal device, whether to provide timing for the second terminal device, wherein the second clock set comprises at least one clock.

2. The method according to claim 1, wherein determining, by the first terminal device based on the first clock set and the second clock set supported by the first terminal device, whether to provide timing for the second terminal device comprises:
when the second clock set comprises a timing clock candidate set, and the first clock set does not comprise the timing clock candidate set, determining, by the first terminal device based on a target timing clock in the timing clock candidate set, to provide timing for the second terminal device.

3. The method according to claim 2, wherein the method further comprises:
sending, by the first terminal device, first indication information to the second terminal device, wherein the first indication information indicates time information of the target timing clock.

4. The method according to claim 2 or 3, wherein
when the timing clock candidate set comprises a plurality of timing clocks, the target timing clock is a timing clock with a highest priority in the plurality of timing clocks.

5. The method according to claim 1, wherein determining, by the first terminal device based on the first clock set and the second clock set supported by the first terminal device, whether to provide timing for the second terminal device comprises:
when both the second clock set and the first clock set comprise a communication clock candidate set, determining, by the first terminal device, not to provide timing for the second terminal device.

6. The method according to claim 5, wherein the method further comprises:
sending, by the first terminal device, second indication information to the second terminal device, wherein the second indication information indicates to perform communication with the first terminal device based on a target communication clock in the communication clock candidate set.

7. The method according to claim 6, wherein
the target communication clock is a communication clock with a highest priority in the communication clock candidate set.

8. The method according to any one of claims 1 to 7, wherein the method further comprises:
sending, by the first terminal device, a first request message to the second terminal device, wherein the first request message is used to request information about the clock set supported by the second terminal device.

9. The method according to claim 8, wherein the first request message comprises second capability information, and the second capability information indicates the second clock set.

10. A sidelink communication method, comprising:
sending, by a second terminal device, first capability information of the second terminal device to a first terminal device, wherein the first capability information indicates a first clock set supported by the second terminal device, and the first clock set comprises at least one clock; and
receiving, by the second terminal device, first indication information from the first terminal device, wherein the first indication information indicates time information of a target timing clock, and the target timing clock is determined based on the first clock set; or receiving, by the second terminal device, second indication information from the first terminal device, wherein the second indication information indicates to perform communication with the first terminal device based on a target communication clock, and the target communication clock is determined based on the first clock set.

11. The method according to claim 10, wherein the method further comprises:
synchronizing, by the second terminal device, with the first terminal device based on the target timing clock.

12. The method according to claim 10 or 11, wherein the method further comprises:
receiving, by the second terminal device, a first request message from the first terminal device, wherein the first request message is used to request information about the clock set supported by the second terminal device.

13. The method according to claim 12, wherein the first request message comprises second capability information of the first terminal device, the second capability information indicates a second clock set supported by the first terminal device, and the second clock set comprises at least one clock; and
determining, by the second terminal device based on the first clock set and the second clock set, the target communication clock used for communication with the first terminal device.

14. A communication apparatus, comprising a processor and an interface circuit, wherein the interface circuit is configured to: receive a signal from another communication apparatus and transmit the signal to the processor, or send a signal from the processor to another communication apparatus; and the processor is configured to implement the method according to any one of claims 1 to 9 or is configured to implement the method according to any one of claims 10 to 13 by using a logic circuit or by executing code instructions.

15. A computer-readable storage medium, wherein the storage medium stores a computer program or instructions, and when the computer program or the instructions are executed by a communication apparatus, the method according to any one of claims 1 to 9 is implemented, or the method according to any one of claims 10 to 13 is implemented.
